# EUROPEAN PATENT SPECIFICATION

(11) **EP 2 469 637 B1**
(45) Date of publication and mention of the grant of the patent: **13.11.2019**
(21) Application number: 10252226.5
(22) Date of filing: 24.12.2010
(51) Int. Cl.: H01M 8/248, C25B 9/20, H01M 8/04, C25B 15/08, H01M 8/2475, H01M 8/04746, H01M 8/0438

(54) **Laminate assembly sealing method and arrangement**
Verfahren und Anordnung einer Laminatanordnungsdichtung
Procédé d'étanchéité d'assemblage stratifié et agencement

(43) Date of publication of application: 27.06.2012
(73) Proprietor: Hamilton Sundstrand Space Systems International, Inc., Windsor Locks, CT 06096 (US)
(72) Inventor: Barnett, Robert G., Windsor Locks, CT 06096 (US); Hidalgo, Jorge E., East Windsor, CT 06088 (US)
(74) Representative: Dehns

(56) References cited:
- WO-A1-2010/038869
- JP-A- 2001 131 787
- JP-A- 2001 135 343
- US-A- 5 419 980
- US-A1- 2008 008 917
- US-A1- 2008 090 140

## Description

### BACKGROUND

Laminate assemblies having stacks of laminations are used in a variety of applications, such as fuel cell and electrolyzer applications. Sealing the interfaces between laminations of the laminate assembly desirably prevents overboard leakage of operating fluids from the laminate assembly and cross-cavity leakage of operating fluids from internal cavities established within the laminate assembly. Laminate assemblies utilize various seals to limit overboard and cross-cavity leakage. Example seals include elastomeric coating seals, gasket seals, or relying on the elastic nature of membrane laminations. Notably, these seals rely on an applied load pressurizing the seal to prevent leakage.

Many systems having laminate assemblies apply a preload to the laminate assembly using tie rods. Tightening the tie rods forces the laminations of the laminate assembly and associated seals into a sealed relationship with each other. The maximum amount of preload is limited by the compression capacity of the laminations. After the preload is applied, the internal cavities within the laminate assembly are pressurized. As known, the pressurizing can relax or otherwise disrupt the sealed relationship because the internal pressure forces the laminations against the direction of the preload. Disrupting the sealed relationship can undesirably result in leaks.

US 2008/090140 relates to an electrochemical cell with a dynamic endplate. WO 2010/038869 relates to a solid oxide fuel cell battery. JP 2001 131787 relates to a pressure compensation structure of an electrolysis cell.

### SUMMARY

The present invention is defined by independent method claim 1 and/or independent device claim 8.

An example method of sealing a laminate assembly (claim 1) includes preloading a laminate assembly having a plurality of laminations, pressurizing the laminate assembly, and pressurizing an enclosed volume disposed adjacent an end portion of the laminate assembly to hold the laminations in sealed positions.

An example laminate assembly pressurization arrangement (claim 8) includes a plurality of laminations arranged in a laminate stack. The plurality of laminations are movable between sealed positions and unsealed positions relative to each other. An end plate is adjacent the laminate stack. A housing is configured to establish a first volume together with the end plate. A first group of tie rods is directly secured to the end plate and is configured to move the end plate to a first position that holds the plurality of laminations in sealed positions. A second group of tie rods is directly secured to the housing. Pressurizing the first volume limits movement of the end plate away from the first position.

The laminate assembly has a plurality of laminations. An end plate is adjacent the laminate assembly. The end plate establishes a portion of a second volume. The end plate is configured to urge the laminations toward sealed positions relative to each other when the second enclosed volume is pressurized.

These and other features of the example disclosure can be best understood from the following specification and drawings, the following of which is a brief description:

### BRIEF DESCRIPTION OF THE DRAWINGS

Figure 1 shows a longitudinal cross-section through an example electrolyzer having a laminate assembly.
Figure 2 shows a bottom view of the Figure 1 electrolyzer.
Figure 3 shows a perspective view of an example end plate from the Figure 1 electrolyzer.
Figure 4 shows a perspective view of another example electrolyzer having a laminate assembly.

### DETAILED DESCRIPTION

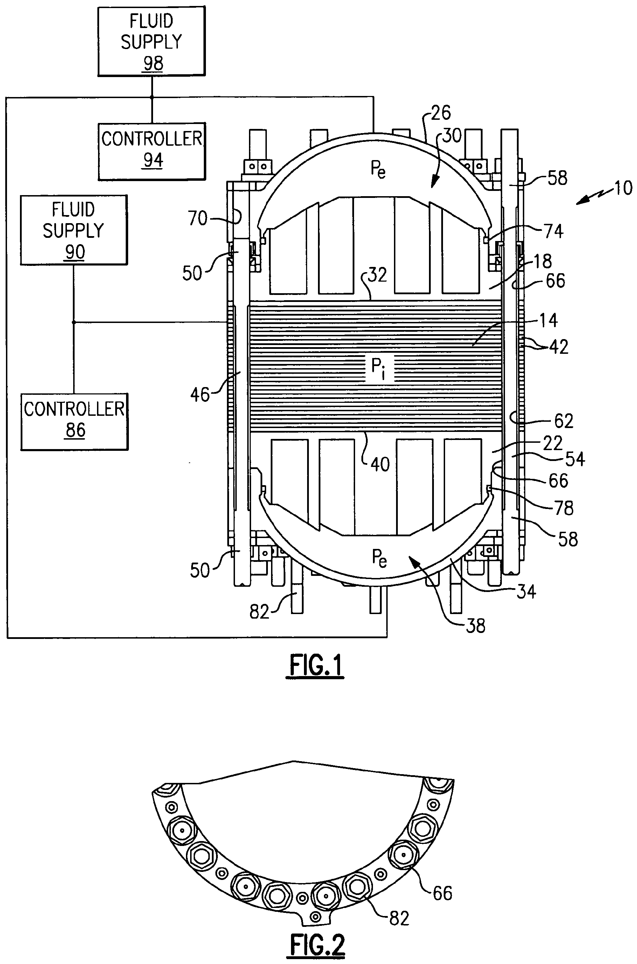

Referring to Figures 1 and 2, an example electrolyzer 10 includes a laminate assembly 14 held between a first end plate 18 and a second end plate 22. A fuel cell includes the laminate assembly 14 in another example. One face of the first end plate 18 contacts the laminate assembly 14. An opposing face of the first end plate 18 establishes the first enclosed volume 30 together with the first housing 26. The first enclosed volume 30 is adjacent a first end portion 32 of the laminate assembly 14. One face of the second end plate 22 contacts the laminate assembly 14. An opposing face of the second end plate 22 establishes the second enclosed volume 38 together with the second housing 34. The second enclosed volume 38 is adjacent a second end portion 40 of the laminate assembly 14.

The laminate assembly 14 includes a plurality of laminations 42. The laminations 42 establish internal cavities within the laminate assembly 14 as is known. The laminations 42 are movable between sealed positions and unsealed positions relative to each other. In this example, the sealed positions permit less leakage of fluid from the laminate assembly 14 than the unsealed positions. The sealed positions also permit less leakage of fluid between the internal cavites of the laminate assembly 14 than the unsealed positions. The pressure within the internal cavities of the laminate assembly 14 is represented by Pi in this example.

A first group of tie rods 46 secure the first end plate 18 relative to the second end plate 22. The example first group of tie rods 46 is secured to the housing 34. In this example, the tie rods within the first group of tie rods 46 include threaded portions 50 that are configured to engage nuts to secure the first end plate 18 relative to the second end plate 22. Tightening the nuts onto the threaded portions 50 of the first group of tie rods 46 urges the first end plate 18 toward the second end plate 22, which compresses the laminate assembly 14 and moves the laminations 42 to sealed positions relative to each other. The example first end plate 18 moves relative to the second end plate 22 as the first group of tie rods 46 is tightened. In this example, the laminate assembly 14 is preloaded by tightening the first group of tie rods 46.

A second group of tie rods 54 engage the first housing 26 and the second housing 34. Notably, the first group of tie rods 46 is separate from the second group of tie rods 54. That is, the first group of tie rods 46 includes different tie rods and is configured to connect to different components than the second group of tie rods 54.

In this example, the tie rods within the second group of tie rods 54 include threaded portions 58 that are configured to engage nuts to secure the first housing 26 relative to the second housing 34. Tightening the nuts onto the threaded portions 58 urges the first housing 26 toward the second housing 34. The second group of tie rods 54 is lightly preloaded to load all the tie rods within the second group of tie rods 54 in this example.

Although the first group of tie rods 46 and the second group of tie rods 54 are shown as tie rods in this example, other examples include using bolts, clamps, etc., in place of, or in addition to, the tie rods.

The example laminate assembly 14 has a generally circular cross-section and establishes multiple apertures 62 radially positioned near the outer radial edge of the laminate assembly. Each of the apertures 62 are configured to receive one of the tie rods from the first group of tie rods 46 or the second group of tie rods 54.

The first end plate 18 and the second end plate 22 include apertures 66 configured to receive a tie rod from the second group of tie rods 54. The apertures 66 are sized such that the tie rod from the second group of tie rods 54 is free to move relative to the end plates 18 and 22 as the tie rods in the first group of tie rods 46 are tightened to the first end plate 18, the second end plate 22, or both.

The example first housing 26 includes a channel 70, or hole, that permits movement of the first group of tie rods 46 as the first group of tie rods 46 is tightened or moves relative to the first housing 26.

Dynamic seals 74 are positioned between the first end plate 18 and the first housing 26 to facilitate holding fluid within the first enclosed volume 30. A static seal 78 is positioned between the second end plate 22 and the second housing 34 to facilitate holding fluid within the second enclosed volume 38. Spring energized dynamic seals 74 and static seals 78 are shown. Other example seals include a bellows, a diaphragm, or a reinforced O-ring seal.

As can be appreciated from the figures, the example first housing 26 and the example second housing 34 are dome shaped. The first enclosed volume 30 and the second enclosed volume 38 have a generally hemispherical shape. Notably, the enclosed volumes 30 and 38 are disposed at the ends of the laminate assembly 14 and do not encircle the laminate assembly 14. In the disclosed examples, two domes are used. In another example, only one dome (or only the first housing 26) is used.

In this example, the pressure of the first enclosed volume 30 and the second enclosed volume 38 is represented by Pe. After the laminate assembly 14 is preloaded by tightening the first group of tie rods 46, Pe is increased to oppose movement of the first end plate 18 away from the laminate assembly 14. The pressure Pe effectively neutralizes the pressure Pi such that the first group of tie rods 46 does not respond to the pressure Pi. The second group of tie rods 54 instead carries the pressure load associate with pressurizing the laminate assembly 14. The first group of tie rods 46 is thus sized to accommodate the preload, and the second group of tie rods 54 is sized to accommodate the pressures Pi and Pe.

Fluid is introduced to the laminate assembly 14 through a plurality of fluid feed ports 82. The fluid feed ports 82 are axially extending in this example. In another example the fluid feed ports 82 are radially extending.

In one example the fluid is water, which the electrolyzer 10 breaks down into hydrogen and oxygen. The example electrolyzer 10 includes a controller 86 configured to control fluid flow from a fluid supply 90 to the laminate assembly 14. The controller 86 controls Pi by controlling the fluid supply 90. Introducing fluid to the laminate assembly 14 pressurizes the internal cavities of the laminate assembly 14 and increases Pi. In this example, Pe limits movement of the laminations 42 toward unsealed positions. Limiting this movement maintains the sealed relationship of the laminations 42 within the laminate assembly 14..In the prior art, increasing Pi moved the laminations 42 toward unsealed positions.

A controller 94 is configured to control fluid flow from a fluid supply 98 to the first enclosed volume 30 and the second enclosed volume 38. The example fluid is nitrogen, and the controller 86 controls Pe by controlling the flow of nitrogen to the first enclosed volume 30. A person having skill in this art and having the benefit of this disclosure would understand how to pressurize the first enclosed volume 30 and the second enclosed volume 38 using the fluid supply 98 and the controller 94 by incorporating a suitable valve arrangement into the electrolyzer 10, for example.

In one example, the first enclosed volume 30, the enclosed volume 38, and the internal cavities within the laminate assembly 14 are fluidly coupled. That is, increasing the pressure Pi directly increases the pressure Pe. Such an example includes pressurizing the laminate assembly 14, the first enclosed volume 30 and the second enclosed volume 38 with the same fluid. Such an example may not require the fluid supply 98. Other examples include using the hydrogen from the electrolyzer process to increase the pressure Pe. Typically one of the fluids in the laminate assembly 14 is used to pressurize the enclosed volume 30 and the enclosed volume 38

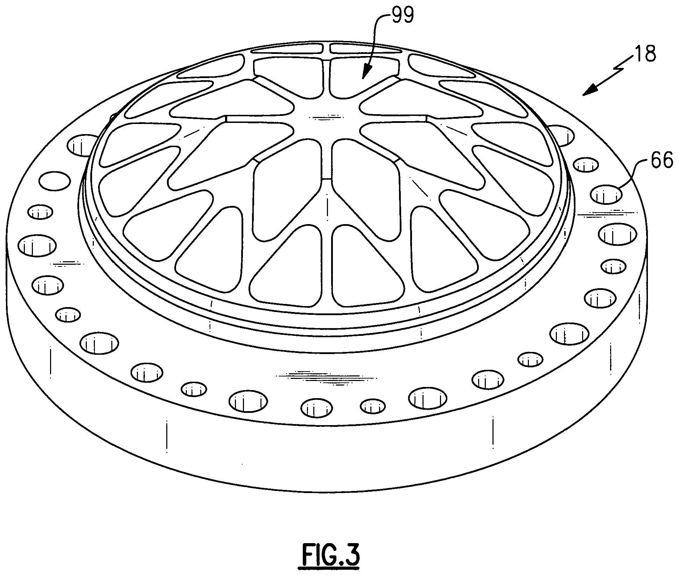

Referring to Figure 3, the first end plate 18 includes a plurality of apertures 99 that extend longitudinally nearly through the first end plate 18. Incorporating the plurality of apertures 99 reduces the overall weight of the first end plate 18 while maintaining the strength of the first end plate 18. The first end plate 18 comprises a material stiff enough to facilitate uniform compression of the laminate assembly 14.

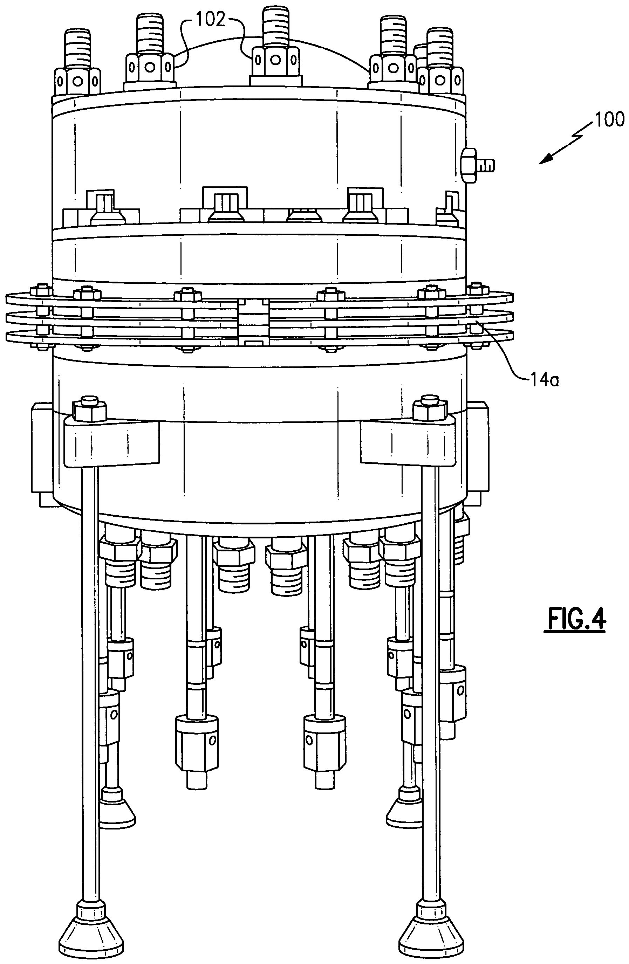

Referring to Figure 4, another example electrolyzer 100 includes a plurality of cells, each having laminate assemblies 14a. A plurality of nuts 102 secure the threaded portions 58 for the second group of tie rods 54.

Features of the disclosed examples include maintaining a sealing relationship between adjacent laminations with reduced structure and complexity. Another feature of the disclosed example is the use of two independent groupings of tie rods. One group is for preloading the laminate assembly, and the other group is for responding to pressurization of the laminate assembly. Yet another feature is the use of a dynamic seal between the dome and the first end plate. The dynamic seal facilitates the transmission of pressure load through the first end plate to the laminate assembly. Yet another feature of the disclosed example is a relatively lightweight and low volume active compression system that is independent from the preload system. For example, the first end plate and the second end plate can be lightweight because the only substantial force acting on them is the preload force.

Although a preferred embodiment has been disclosed, a worker of ordinary skill in this art would recognize that certain modifications would come within the scope of this invention. For that reason, the following claims should be studied to determine the true scope and content of this invention.

## Claims

1. A method of sealing a laminate assembly (14) comprising:
preloading a laminate assembly (14) having a plurality of laminations (42) with a first tie rod arrangement (46), the first tie rod arrangement extending through a channel (70) in a first housing (26), wherein the channel permits movement of the first tie rod arrangement (46) as the first tie rod arrangement is tightened or moves relative to the first housing (26), wherein the laminate assembly (14) is disposed between opposing endplates (18, 22), one of the opposing endplates (18, 22) establishing a portion of the enclosed volume;
pressurizing the laminate assembly (14);
pressurizing an enclosed volume (30, 38) disposed adjacent an end portion of the laminate assembly (14) to hold the laminations (42) in sealed positions, wherein the first housing is configured to establish said enclosed volume; and
providing a second endplate (22) adjacent the laminations (42), the second endplate establishing a portion of a second enclosed volume;
securing the first endplate (18) relative to the second endplate (22) with nuts engaged on threaded portions (50) of the first tie rod arrangement; and
preloading the laminate assembly (10) using said first tie rod arrangement (46) secured to at least one of the opposing endplates (18, 22), and using a second tie rod arrangement (54) different from the first tie rod arrangement (46) to hold said housing (26, 34) relative to the laminate assembly (14), the housing (26, 34) establishing the enclosed volume (30, 38) with one of the opposing endplates (18, 22).

2. The method of claim 1 wherein the preloading comprises urging the laminations toward sealed positions using said first tie rod arrangement (46).

3. The method of claim 1 comprising pressurizing the enclosed volume (30, 38) with a first pressure that is not less than the pressure within the laminate assembly.

4. The method of claim 1 wherein one of the opposing endplates supports the laminate assembly (14) and the other of the opposing endplates establishes the portion of the enclosed volume.

5. The method of claim 1 or 4 wherein the first tie rod arrangement and the second tie rod arrangement each comprise more than one tie rod (46, 54).

6. The method of claim 5 wherein the first tie rod arrangement (46) and the second tie rod arrangement (54) are received within apertures established in the laminate assembly (14).

7. The method of any preceding claim including moving fluid into the enclosed volume (30, 38) to pressurize the enclosed volume, the enclosed volume optionally being in fluid communication with the laminate assembly (14) such that the pressure of the enclosed volume equalizes with the pressure within the laminate assembly.

8. A laminate assembly pressurization arrangement comprising:
a laminate assembly having a plurality of laminations (42);
a first endplate (18) adjacent the laminations (42), the first endplate (18) establishing a portion of a first enclosed volume (30), wherein the first endplate is configured to urge the plurality of laminations toward sealed positions relative to each other when the first enclosed volume is pressurized; a second endplate (22) adjacent the laminations (42), the second endplate (22) establishing a portion of a second enclosed volume;
a first tie rod arrangement (46) wherein the first tie rod arrangement extends through a channel (70) in a first housing (26), wherein the channel permits movement of the first tie rod arrangement as the first tie rod arrangement is tightened or moves relative to the first housing (26);
wherein the first tie rod arrangement (46) includes threaded portions (50) to engage nuts to secure the first endplate (18) to the second endplate (22) and
said plurality of laminations (42) arranged in a laminate stack, the plurality of laminations (42) moveable between sealed positions and unsealed positions relative to each other;
said first endplate (18) adjacent the laminate stack;
said first housing (26) configured to establish said first volume (30) together with the first endplate (18);
said first tie rod arrangement comprising a first group of tie rods (46) secured relative to the first endplate (18) and configured to move the first endplate (18) to a first position that holds the plurality of laminations (42) in sealed positions; and
a second group of tie rods (54) secured relative to the housing (26), wherein pressurizing the first volume limits movement of the endplate (42) away from the first position.

9. The arrangement of claim 8 including a second housing (34) configured to establish the second enclosed volume together with the endplate, wherein the housing is secured relative to the laminate assembly separately from the endplate, and/or wherein the first enclosed volume is in fluid communication with the second enclosed volume such that pressurizing one of the first enclosed volume and the second enclosed volume also pressurizes the other of the first enclosed volume and the second enclosed volume.

10. The arrangement of claim 8 wherein the first housing (26) comprises a dome.

11. The arrangement of claim 10 comprising a dynamic seal (74) disposed between the dome (26) and the first endplate (18).

12. The arrangement of claim 8 or 10 wherein the first group of tie rods (46) extend through a first group of apertures established in the plurality of laminations (42) the second group of tie rods (54) extend through a second group of apertures established in the plurality of laminations (42), and wherein, optionally, the laminations (42) have a circular cross-sectional profile, the first group of apertures and the second group of apertures positioned near a radially outer edge of the laminations (42).

13. The arrangement of any of claims 9 to 12 including a controller (94) configured to control fluid flow to the first volume (30) to control pressure within the first volume (30).

## Patentansprüche

1. Verfahren zum Abdichten einer Laminatbaugruppe (14), das Folgendes umfasst:
Vorspannen einer Laminatbaugruppe (14), die eine Vielzahl von Blechen (42) aufweist, mit einer ersten Zugstangenanordnung (46), wobei die erste Zugstangenanordnung sich durch einen Kanal (70) in einem ersten Gehäuse (26) erstreckt, wobei der Kanal eine Bewegung der ersten Zugstangenanordnung (46) ermöglicht, während die erste Zugstangenanordnung festgezogen wird oder sich relativ zu dem ersten Gehäuse (26) bewegt, wobei die Laminatbaugruppe (14) zwischen sich gegenüberliegenden Endplatten (18, 22) angeordnet ist, wobei eine der sich gegenüberliegenden Endplatten (18, 22) einen Abschnitt des eingeschlossenen Volumens etabliert;
Beaufschlagen der Laminatbaugruppe (14) mit einem Druck;
Beaufschlagen eines eingeschlossenen Volumens (30, 38), das benachbart zu einem Endabschnitt der Laminatbaugruppe (14) angeordnet ist, mit einem Druck, um die Bleche (42) in abgedichteten Positionen zu halten, wobei das erste Gehäuse dazu konfiguriert ist, das eingeschlossene Volumen zu etablieren; und
Bereitstellen einer zweiten Endplatte (22) benachbart zu den Blechen (42), wobei die zweite Endplatte einen Abschnitt eines zweiten eingeschlossenen Volumens etabliert;
Sichern der ersten Endplatte (18) relativ zu der zweiten Endplatte (22) mit Muttern, die Gewindeabschnitte (50) der ersten Zugstangenanordnung in Eingriff nehmen; und
Vorspannen der Laminatbaugruppe (10) unter Verwendung der ersten Zugstangenanordnung (46), die an mindestens einer der sich gegenüberliegenden Endplatten (18, 22) gesichert ist, und unter Verwendung einer zweiten Zugstangenanordnung (54), die sich von der ersten Zugstangenanordnung (46) unterscheidet, um das Gehäuse (26, 34) relativ zu der Laminatbaugruppe (14) zu halten, wobei das Gehäuse (26, 34) mit einer der sich gegenüberliegenden Endplatten (18, 22) das eingeschlossene Volumen (30, 38) etabliert.

2. Verfahren nach Anspruch 1, wobei das Vorspannen ein Zwingen der Bleche in Richtung von abgedichteten Positionen unter Verwendung der ersten Zugstangenanordnung (46) umfasst.

3. Verfahren nach Anspruch 1, umfassend ein Beaufschlagen des eingeschlossenen Volumens (30, 38) mit einem ersten Druck, der nicht geringer ist als der Druck innerhalb der Laminatanordnung.

4. Verfahren nach Anspruch 1, wobei eine der sich gegenüberliegenden Endplatten die Laminatbaugruppe (14) trägt und die andere der sich gegenüberliegenden Endplatten den Abschnitt des eingeschlossenen Volumens etabliert.

5. Verfahren nach Anspruch 1 oder 4, wobei die erste Zugstangenanordnung und die zweite Zugstangenanordnung jeweils mehr als eine Zugstange (46, 54) umfassen.

6. Verfahren nach Anspruch 5, wobei die erste Zugstangenanordnung (46) und die zweite Zugstangenanordnung (54) innerhalb von Öffnungen aufgenommen sind, die in der Laminatbaugruppe (14) etabliert sind.

7. Verfahren nach einem der vorhergehenden Ansprüche, das ein Bewegen von Fluid in das eingeschlossene Volumen (30, 38) beinhaltet, um das eingeschlossene Volumen mit einem Druck zu beaufschlagen, wobei das eingeschlossene Volumen gegebenenfalls derart in Fluidkommunikation mit der Laminatbaugruppe (14) steht, dass der Druck des eingeschlossenen Volumens gleich dem Druck innerhalb der Laminatbaugruppe ist.

8. Anordnung zur Beaufschlagung einer Laminatbaugruppe mit einem Druck, die Folgendes umfasst:
eine Laminatbaugruppe, die eine Vielzahl von Blechen (42) aufweist;
eine erste Endplatte (18), die zu den Blechen (42) benachbart ist, wobei die erste Endplatte (18) einen Abschnitt eines ersten eingeschlossenen Volumens (30) etabliert, wobei die erste Endplatte dazu konfiguriert ist, die Vielzahl von Blechen in Richtung von abgedichteten Positionen relativ zueinander zu zwingen, wenn das erste eingeschlossene Volumen mit einem Druck beaufschlagt ist; eine zweite Endplatte (22), die zu den Blechen (42) benachbart ist, wobei die zweite Endplatte (22) einen Abschnitt eines zweiten eingeschlossenen Volumens etabliert;
eine erste Zugstangenanordnung (46), wobei die erste Zugstangenanordnung sich durch einen Kanal (70) in einem ersten Gehäuse (26) erstreckt, wobei der Kanal eine Bewegung der ersten Zugstangenanordnung ermöglicht, während die erste Zugstangenanordnung festgezogen wird oder sich relativ zu dem ersten Gehäuse (26) bewegt;
wobei die erste Zugstangenanordnung (46) Gewindeabschnitte (50) beinhaltet, um Muttern in Eingriff zu nehmen, um die erste Endplatte (18) an der zweiten Endplatte (22) zu sichern, und
die Vielzahl von Blechen (42), die in einem Blechpaket angeordnet sind, wobei die Vielzahl von Blechen (42) zwischen abgedichteten Positionen und nichtabgedichteten Positionen relativ zueinander bewegbar sind;
wobei die erste Endplatte (18) benachbart zu dem Blechpaket ist;
wobei das erste Gehäuse (26) dazu konfiguriert ist, das erste Volumen (30) zusammen mit der ersten Endplatte (18) zu etablieren;
wobei die erste Zugstangenanordnung eine erste Gruppe von Zugstangen (46) umfasst, die relativ zu der ersten Endplatte (18) gesichert ist, und dazu konfiguriert ist, die erste Endplatte (18) in eine erste Position zu bewegen, die die Vielzahl von Blechen (42) in abgedichteten Positionen hält; und
eine zweite Gruppe von Zugstangen (54), die relativ zu dem Gehäuse (26) gesichert ist, wobei das Beaufschlagen des ersten Volumens mit einem Druck eine Bewegung der Endplatte (42) weg von der ersten Position begrenzt.

9. Anordnung nach Anspruch 8, beinhaltend ein zweites Gehäuse (34), das dazu konfiguriert ist, das zweite eingeschlossene Volumen zusammen mit der Endplatte zu etablieren, wobei das Gehäuse relativ zu der Laminatbaugruppe getrennt von der Endplatte gesichert ist, und/oder wobei das erste eingeschlossene Volumen derart in Fluidkommunikation mit dem zweiten eingeschlossenen Volumen steht, dass ein Beaufschlagen von einem von dem ersten eingeschlossenen Volumen und dem zweiten eingeschlossenen Volumen mit einem Druck ebenfalls das andere von dem ersten eingeschlossenen Volumen und dem zweiten eingeschlossenen Volumen mit einem Druck beaufschlagt.

10. Anordnung nach Anspruch 8, wobei das erste Gehäuse (26) eine Kuppel umfasst.

11. Anordnung nach Anspruch 10, umfassend eine dynamische Dichtung (74), die zwischen der Kuppel (26) und der ersten Endplatte (18) angeordnet ist.

12. Anordnung nach Anspruch 8 oder 10, wobei die erste Gruppe von Zugstangen (46) sich durch eine erste Gruppe von Öffnungen erstreckt, die in der Vielzahl von Blechen (42) etabliert ist, und die zweite Gruppe von Zugstangen (54) sich durch eine zweite Gruppe von Öffnungen erstreckt, die in der Vielzahl von Blechen (42) etabliert ist, wobei die Bleche (42) gegebenenfalls ein kreisförmiges Querschnittsprofil aufweisen, wobei die erste Gruppe von Öffnungen und die zweite Gruppe von Öffnungen in der Nähe einer radialen Außenkante der Bleche (42) positioniert sind.

13. Anordnung nach einem der Ansprüche 9 bis 12, beinhaltend eine Steuerung (94), die dazu konfiguriert ist, eine Fluidströmung zu dem ersten Volumen (30) zu steuern, um einen Druck innerhalb des ersten Volumens (30) zu steuern.

## Revendications

1. Procédé d'étanchéité d'assemblage stratifié (14) comprenant :
la précharge d'un assemblage stratifié (14) comportant une pluralité de stratifications (42) avec un premier agencement de tirant (46), le premier agencement de tirant s'étendant à travers un canal (70) dans un premier logement (26), dans lequel le canal permet un déplacement du premier agencement de tirant (46) lorsque le premier agencement de tirant est serré ou se déplace par rapport au premier logement (26), dans lequel l'assemblage stratifié (14) est disposé entre des plaques d'extrémité opposées (18, 22), l'une des plaques d'extrémité opposées (18, 22) établissant une partie du volume fermé ;
la pressurisation de l'assemblage stratifié (14) ;
la pressurisation d'un volume fermé (30, 38) disposé de manière adjacente à une partie d'extrémité de l'assemblage stratifié (14) pour maintenir les stratifications (42) dans des positions étanches, dans lequel le premier logement est conçu pour établir ledit volume fermé ; et
la fourniture d'une seconde plaque d'extrémité (22) adjacente aux stratifications (42), la seconde plaque d'extrémité établissant une partie d'un second volume fermé ;
la fixation de la première plaque d'extrémité (18) par rapport à la seconde plaque d'extrémité (22) avec des écrous mis en prise sur des parties filetées (50) du premier agencement de tirant ; et
la précharge de l'assemblage stratifié (10) à l'aide dudit premier agencement de tirant (46) fixé à au moins l'une des plaques d'extrémité opposées (18, 22), et à l'aide d'un second agencement de tirant (54) différent du premier agencement de tirant (46) pour maintenir ledit logement (26, 34) par rapport à l'assemblage stratifié (14), le logement (26, 34) établissant le volume fermé (30, 38) avec l'une des plaques d'extrémité opposées (18, 22).

2. Procédé selon la revendication 1, dans lequel la précharge comprend la poussée des stratifications dans des positions étanches à l'aide dudit premier agencement de tirant (46).

3. Procédé selon la revendication 1, comprenant la pressurisation du volume fermé (30, 38) avec une première pression qui n'est pas inférieure à la pression à l'intérieur de l'assemblage stratifié.

4. Procédé selon la revendication 1, dans lequel l'une des plaques d'extrémité opposées supporte l'assemblage stratifié (14) et l'autre des plaques d'extrémité opposées établit la partie du volume fermé.

5. Procédé selon la revendication 1 ou 4, dans lequel le premier agencement de tirant et le second agencement de tirant comprennent chacun plusieurs tirants (46, 54).

6. Procédé selon la revendication 5, dans lequel le premier agencement de tirant (46) et le second agencement de tirant (54) sont reçus dans des ouvertures établies dans l'assemblage stratifié (14).

7. Procédé selon une quelconque revendication précédente, comprenant le déplacement de fluide dans le volume fermé (30, 38) pour pressuriser le volume fermé, le volume fermé étant éventuellement en communication fluidique avec l'assemblage stratifié (14) de sorte que la pression du volume fermé est égale à la pression à l'intérieur de l'assemblage stratifié.

8. Agencement de pressurisation d'assemblage stratifié comprenant :
un assemblage stratifié comportant une pluralité de stratifications (42) ;
une première plaque d'extrémité (18) adjacente aux stratifications (42), la première plaque d'extrémité (18) établissant une partie d'un premier volume fermé (30), dans lequel la première plaque d'extrémité est conçue pour pousser la pluralité de stratifications dans des positions étanches les unes par rapport aux autres lorsque le premier volume fermé est pressurisé ; une seconde plaque d'extrémité (22) adjacente aux stratifications (42), la seconde plaque d'extrémité (22) établissant une partie d'un second volume fermé ;
un premier agencement de tirant (46), dans lequel le premier agencement de tirant s'étend à travers un canal (70) dans un premier logement (26), dans lequel le canal permet un déplacement du premier agencement de tirant lorsque le premier agencement de tirant est serré ou se déplace par rapport au premier logement (26) ;
dans lequel le premier agencement de tirant (46) comprend des parties filetées (50) pour venir en prise avec des écrous afin de fixer la première plaque d'extrémité (18) à la seconde plaque d'extrémité (22) et
ladite pluralité de stratifications (42) agencées dans une pile de stratifiés, la pluralité de stratifications (42) pouvant être déplacées entre des positions étanches et des positions non étanches les unes par rapport aux autres ;
ladite première plaque d'extrémité (18) adjacente à la pile de stratifiés ;
ledit premier logement (26) conçu pour établir ledit premier volume (30) conjointement avec la première plaque d'extrémité (18) ;
ledit premier agencement de tirant comprenant un premier groupe de tirants (46) fixés par rapport à la première plaque d'extrémité (18) et conçus pour déplacer la première plaque d'extrémité (18) dans une première position qui maintient la pluralité de stratifications (42) dans des positions étanches ; et
un second groupe de tirants (54) fixés par rapport au logement (26), dans lequel la pressurisation du premier volume limite le déplacement de la plaque d'extrémité (42) à l'opposé de la première position.

9. Agencement selon la revendication 8, comprenant un second logement (34) conçu pour établir le second volume fermé conjointement avec la plaque d'extrémité, dans lequel le logement est fixé par rapport à l'assemblage stratifié séparément de la plaque d'extrémité, et/ou dans lequel le premier volume fermé est en communication fluidique avec le second volume fermé de sorte que la pressurisation de l'un du premier volume fermé et du second volume fermé pressurise également l'autre du premier volume fermé et du second volume fermé.

10. Agencement selon la revendication 8, dans lequel le premier logement (26) comprend un dôme.

11. Agencement selon la revendication 10, comprenant un joint dynamique (74) disposé entre le dôme (26) et la première plaque d'extrémité (18).

12. Agencement selon la revendication 8 ou 10, dans lequel le premier groupe de tirants (46) s'étend à travers un premier groupe d'ouvertures établies dans la pluralité de stratifications (42) et le second groupe de tirants (54) s'étendent à travers un second groupe d'ouvertures établies dans la pluralité de stratifications (42) et dans lequel, éventuellement, les stratifications (42) ont un profil transversal circulaire, le premier groupe d'ouvertures et le second groupe d'ouvertures étant positionnés près d'un bord radialement extérieur des stratifications (42).

13. Agencement selon l'une quelconque des revendications 9 à 12, comprenant un contrôleur (94) conçu pour contrôler l'écoulement de fluide jusqu'au premier volume (30) afin de contrôler la pression à l'intérieur du premier volume (30).
